# EUROPÄISCHE PATENTSCHRIFT

(11) **EP 3 642 928 B1**
(45) Veröffentlichungstag und Bekanntmachung des Hinweises auf die Patenterteilung: **18.05.2022**
(21) Anmeldenummer: 18732742.4
(22) Anmeldetag: 19.06.2018
(51) Int. Cl.: H02J 7/00, B60R 16/03

(54) **AUFLADEVORRICHTUNG, VERFAHREN ZUM AUFLADEN EINES MOBILEN ENDGERÄTS, STEUEREINRICHTUNG, UND KRAFTFAHRZEUG**
CHARGING DEVICE, METHOD FOR CHARGING A MOBILE TERMINAL, CONTROL UNIT AND MOTOR VEHICLE
DISPOSITIF DE CHARGE, PROCÉDÉ DE CHARGE D'UN TERMINAL MOBILE, DISPOSITIF DE COMMANDE ET VÉHICULE AUTOMOBILE

(30) Priorität: 23.06.2017 DE 102017210641
(43) Veröffentlichungstag der Anmeldung: 29.04.2020
(73) Patentinhaber: Audi AG, 85045 Ingolstadt (DE)
(72) Erfinder: GALLITZDORFER, Torsten, 01589 Riesa (DE)
(86) Internationale Anmeldenummer: PCT/EP2018/066185
(87) Internationale Veröffentlichungsnummer: WO 2018/234272

(56) Entgegenhaltungen:
- EP-A1- 2 747 236
- DE-A1-102012 018 824
- US-A1- 2012 313 576
- US-A1- 2013 147 426

## Beschreibung

Die Erfindung betrifft eine Aufladevorrichtung für ein Kraftfahrzeug zum Aufladen eines Energiespeichers eines mobilen Endgeräts mit Energie. Die Erfindung betrifft ebenfalls ein Verfahren zum Aufladen der Energiespeichereinrichtung des mobilen Endgeräts, wobei unter einer Energiespeichereinrichtung ein Bauteil oder eine Gerätekomponente zum Speichern von Energie, beispielsweise Strom, verstanden wird. Die Energiespeichereinrichtung kann beispielsweise als Batterie oder Akkumulator ausgestaltet sein.

Heutige moderne induktive Ladevorrichtungen, sogenannte Ladeschalen, befinden sich in Fahrzeugen meist an einem durch den Hersteller fest definierten Ort. Sie sind meist vertieft ausgeprägt, damit das mobile Endgerät während der Fahrt gut gehalten und gegen Verrutschen oder Herausfallen geschützt ist. Dabei hilft oft eine Gummimatte.

Die DE 10 2012 018 824 A1 beschreibt ein Ladegerät für ein tragbares Gerät.

Ihre festgelegte universelle Größe soll für möglichst viele unterschiedliche mobile Endgeräte nutzbar sein. Daher ist keine maßangefertigte Ladeschale verfügbar, sondern diese ist meistens größer in dessen Ausmaßen definiert. Große Fasen an den Seiten der Ladevorrichtungsschale sollen für eine leichte Entnahme des mobilen Endgeräts nach dem Laden sorgen. Man legt hilfsweise ein Telefon in diese Vorrichtung und das Telefon wird ohne zusätzliche Steckverbindung automatisch induktiv, also drahtlos, geladen.

Eine Anzeige des Ladezustands, also eine Information darüber, ob ein Gerät vollständig geladen wurde, erfolgt über meist die Displayanzeige des mobilen Endgeräts oder einen Bildschirm eines Kombiinstruments.

Orte der Ladevorrichtung sind im Kraftfahrzeug immer fest definiert und lassen keine Individualisierung des Ladevorgangs zu. Man kann also nur dort sein mobiles Endgerät laden. Durch die universelle Größe der Ladevorrichtungsmulde ist je nach Typ und Größe des mobilen Endgeräts manchmal keine exakte Ladung möglich. Eine Nachpositionierung durch den Benutzer ist erforderlich, um ein korrektes Laden bzw. einen korrekten Energiefluss zu ermöglichen.

Die Ladeschale ist steif und kann nicht an das jeweilige mobile Endgerät angepasst werden. Häufig sind solche Ladeschalen für den Benutzer des Kraftfahrzeugs eher ungünstig zu erreichen, und in einem solchen Fall muss sich der Benutzer unter Umständen weit strecken, um sein mobiles Endgerät einzulegen oder herauszunehmen.

Meist wird in einer Ladeschale die gesamte Fläche zum induktiven Laden unter Strom gesetzt, wodurch ein hoher Energieverbrauch entsteht, wobei wenig Effizienz ersichtlich ist. Durch die universelle Ausprägung der Ladeschale wird großflächig Energie übertragen. Da die Größe des mobilen Endgeräts und der Ladestation meist nicht identisch und damit nicht deckungsgleich sind, kann meist keine punktuelle, effiziente und exakte Ladung zwischen der Energiespeichereinrichtung des mobilen Endgeräts und der Ladevorrichtung erfolgen, woraus ein hoher Energieverlust in der Übertragung resultiert.

Bei der Entnahme des mobilen Endgeräts mit langen Fingernägeln kann es zu Problemen kommen. Die Angabe des Ladezustandes über beispielsweise einen Bildschirm eines Kombiinstruments ist zwar informativ, jedoch werden über einen solchen Bildschirm häufig mehrere unterschiedliche Informationen ausgegeben, so dass durch die Anzeige des Ladezustandes noch mehr Informationen von dem Benutzer sortiert werden müssen.

Eine der Erfindung zu Grunde liegende Aufgabe ist das Steigern einer Effizienz eines Ladevorganges beim Aufladen eines mobilen Endgeräts im Kraftfahrzeug.

Die gestellte Aufgabe wird durch die erfindungsgemäßen Vorrichtungen und das erfindungsgemäße Verfahren gemäß der nebengeordneten Patentansprüche gelöst. Vorteilhafte Weiterbildungen sind durch die Unteransprüche gegeben.

Die Erfindung basiert auf der Idee, eine Aufladevorrichtung bereitzustellen, die mindestens ein in seiner Haupterstreckungsachse verstellbares Stabelement aufweist, vorzugsweise eine Vielzahl von Stabelementen, wobei das mindestens eine Stabelement ein Ablageelement bildet, also beispielsweise eine Ablageschale. Die erfindungsgemäße Aufladevorrichtung weist eine Energieabgabeeinrichtung auf, mit der eine Energiespeichereinrichtung des mobilen Endgeräts mittels des mindestens einen Stabelements aufgeladen werden kann. Dadurch wird ein intelligentes System zum Erkennen und Aufladen von mobilen Endgeräten bereitgestellt, das eine Ladeschale, also das Ablageelement, bildet, die passförmig oder zumindest teilweise passförmig zu einer Form des mobilen Endgeräts ist. Die Anpassung der Form des Ablageelements erfolgt also passend zu dem mobilen Endgerät.

Die erfindungsgemäße Aufladevorrichtung für ein Kraftfahrzeug kann beispielsweise Teil eines Innenraumverkleidungselements des Kraftfahrzeugs ausgestaltet sein oder das Innenraumverkleidungselement bilden, wobei das Innenraumverkleidungselement beispielsweise eine Mittelkonsole oder ein Armaturenbrett oder eine Armablage sein kann.

Die erfindungsgemäße Aufladevorrichtung ist gekennzeichnet durch eine Mehrzahl an Stabelementen, wobei jedes der Stabelemente, also jedes der länglichen Elemente mit einem überwiegend geraden Körper, dessen Länge gegenüber seinen übrigen Abmessungen und der sich daraus ergebenden Querschnittsoberfläche größer ist, ein erstes Ende mit einer Querschnittsoberfläche als Endfläche aufweist, wobei die Querschnittsoberfläche auch zum Beispiel als Endfläche oder Stirnseite oder Auflagefläche bezeichnet werden kann. Die Querschnittsoberfläche des ersten Endes bildet einen Anteil einer Ablagefläche der Aufladevorrichtung. Ein Stabelement kann beispielhaft als Pin oder Stäbchen ausgestaltet sein.

Eine Haupterstreckungsachse jedes Stabelements schneidet die Querschnittsoberfläche des ersten Endes und damit der Ablagefläche, sodass ein zweites, dem ersten Ende gegenüberliegenden Ende des jeweiligen Stabelements von der Ablagefläche abgewandt ist und in die Aufladevorrichtung hineinragt.

Jedes der Stabelemente ist jeweils entlang seiner Haupterstreckungsachse verstellbar angeordnet, wobei die jeweiligen Querschnittsoberflächen den Anteil der Ablagefläche der Aufladevorrichtung bilden.

Die Aufladevorrichtung weist zusätzlich eine Stelleinrichtung zum Verstellen des mindestens einen Stabelements entlang der Haupterstreckungsrichtung des mindestens einen Stabelements auf. Mit anderen Worten kann das mindestens eine Stabelement aus der Aufladevorrichtung heraus oder in die Aufladevorrichtung hinein verstellt werden. Dabei ist die Stelleinrichtung dazu ausgebildet, einen Anteil oder jedes der Stabelemente zu verstellen, vorzugsweise jedes der Stabelemente unabhängig von den anderen Stabelementen zu verstellen.

Die erfindungsgemäße Aufladevorrichtung ist weiterhin gekennzeichnet durch eine Energieabgabeeinrichtung mit mindestens einem Energieabgabeelement, wobei die Energieabgabeeinrichtung zum Abgeben von Energie an die Energiespeichereinrichtung des mobilen Endgeräts mittels dem mindestens eine Energieabgabeelement ausgestaltet ist. Als Energieabgabeeinrichtung wird dabei eine Gerätekomponente oder ein Bauteil verstanden, die/das zum Abgeben von Energie ausgestaltet ist, und kann beispielsweise als Bauteil mit einer Stromquelle und einer Induktionsspule als Energieabgabeelement ausgestaltet sein kann. Vorzugsweise umfasst dabei das mindestens eine Stabelement das Energieabgabeelement. Hierdurch wird eine direkte Übertragung des Stroms, und damit eine effiziente Übertragung der Energie, ermöglicht.

Dabei ist die Energieabgabeeinrichtung dazu ausgebildet, über einen Anteil der Stabelemente oder jedes der Stabelemente Energie abzugeben. Vorzugsweise kann dabei jedes der Stabelemente ein Energieabgabeelement aufweisen.

Es ergeben sich die oben genannten Vorteile und die oben beschriebenen Nachteile werden reduziert. Die erfindungsgemäße Aufladevorrichtung stellt einen frei wählbaren Ort zum induktiven Laden einer großzügigen Oberfläche bereit. Hierdurch ergeben sich eine sehr hohe Freiheit für den Benutzer des Kraftfahrzeugs beim Ablegen des mobilen Endgeräts und ein sehr effizienter Ladevorgang.

Die erfindungsgemäße Aufladevorrichtung ermöglicht ein punktuelles und effizientes, innovatives Laden des mobilen Endgeräts, woraus sich eine Energieersparnis und eine Reduktion von zu großen Magnetfeldern ergeben. Die erfindungsgemäße Aufladevorrichtung produziert weniger störende Magnetwellen, die einen negativen Einfluss auf das Gesamtsystem haben können. Weiterhin ermöglicht die erfindungsgemäße Aufladevorrichtung eine Adaption an verschiedene Nutzungsszenarien. Beispielsweise durch Abrufen von Informationen oder einem Information-Datenblatt des mobilen Endgeräts in Echtzeit beim Annähern oder Betreten des Kraftfahrzeugs kann die Stelleinrichtung durch Verstellen des mindestens einen Stabelements eine exakte, passförmige Halterung und Ladung vorbereiten. Die erfindungsgemäße Aufladevorrichtung ermöglicht außerdem eine nahezu perfekte Entnahme und Halterung während der Fahrt.

Bei einer solchen Aufladevorrichtung können an unterschiedlichen Positionen Ablageelemente gebildet werden, sodass besonders vorteilhaft auf unterschiedliche physische Gegebenheiten des Benutzers oder Sitzpositionen unterschiedlicher Benutzer eingegangen werden kann. Außerdem kann das Ablageelement an eine andere Position verlegt werden, während das mobile Endgerät bereits dem Ablageelement gelagert oder von diesem gehalten wird, sodass das mobile Endgerät von einer ersten Position in eine weitere Position geschoben werden kann. Beispielsweise kann also das mobile Endgerät so näher an eine Hand des Benutzers verschoben werden, oder das mobile Endgerät kann beispielsweise bei einer Veränderung der Sitzposition in eine für die neue Sitzposition günstigere Lage verschoben werden.

Gemäß einer weiteren Ausführungsform der erfindungsgemäßen Aufladevorrichtung kann diese eine Antenneneinrichtung zum Bereitstellen einer Datenkommunikationsverbindung aufweisen. Hierdurch kann ein Antennensignal verstärkt und an eine Antenne des mobilen Endgeräts übertragen werden. Es ergibt sich ein besserer Empfang des mobilen Endgeräts.

Die Aufladevorrichtung kann optional eine Kratzschutzeinrichtung aufweisen, also ein Bauteil zum Reduzieren eines Risikos des Zerkratzens des mobilen Endgeräts. Die Kratzschutzeinrichtung kann einen Anteil einer Oberfläche des mindestens einen Stabelements zumindest teilweise bedecken. Beispielsweise kann die Kratzschutzeinrichtung für jedes der Stabelemente eine Gummihülle aufweisen, die das jeweilige Stabelement zumindest teilweise ummanteln und die Querschnittsoberfläche zumindest teilweise abdecken kann. Dadurch wird zum Beispiel ein Reiben des mobilen Endgeräts auf dem Stabelement reduziert.

Gemäß einer bevorzugten Ausführungsform der erfindungsgemäßen Aufladevorrichtung kann diese eine Ausgabeeinrichtung aufweisen, also ein Gerät oder eine Gerätekomponente oder ein Bauteil zum Anzeigen eines Bild Inhaltes und zum Ausgeben von Licht, die beispielsweise als Bildschirm und/oder Leuchte ausgestaltet sein kann. Die Ausgabeeinrichtung kann vorzugsweise als Anzeige- und/oder als Leuchteinrichtung ausgestaltet sein, also als Bauteil oder Komponente zum Ausgeben eines Bildinhaltes und/oder von Licht. Die Ausgabeeinrichtung kann beispielsweise mindestens ein Ausgabeelement und/oder mindestens ein Leuchtelement aufweisen, das in und/oder an der Querschnittsoberfläche des ersten Endes des mindestens einen Stabelements angeordnet sein kann. Beispielsweise kann jedes der Stabelemente an dem ersten Ende einen Bildschirm als Ausgabeelement aufweisen.

Eine solche Aufladevorrichtung kann selbständig und eigenständig auf neue Anforderungen reagieren. Beispielsweise können neue Einstellung vor Ort vorgenommen werden, zum Beispiel kann der beispielhafte Bildschirm des mindestens einen Stabelements oder eine Gesamtheit an Bildschirmen mehrerer Stabelemente ein Lichtsignal oder einen Anzeigeinhalt ausgeben, beispielsweise einen Hinweis auf einen Ladezustand der Energiespeichereinrichtung, oder die das Ablageelement bildenden Stabelemente können durch Aufleuchten des Leuchtelements der entsprechenden Ausgabeeinrichtung, beispielsweise durch Aufleuchten einer Lampe oder lichtemittierenden Diode ("LED") oder organischen LED ("OLED") dem Benutzer anzeigen, wo er das mobile Endgerät ablegen kann. Durch beispielsweise Aufspielen von digitalen Grafiken auf beispielsweise mehreren Stabelementen, deren Ausgabeeinrichtung zum Beispiel jeweils einen Bildschirm aufweisen kann, können diese Querschnittsoberflächen außerdem für einen sehr dekorativen Look sorgen. Beispielsweise bei einem Annähern des Benutzers an das Kraftfahrzeug können Informationen, Daten oder Updates vom System über das persönliche mobile Gerät, die automatisch abgerufen werden können, angezeigt werden, oder es kann beispielsweise angezeigt oder hervorgehoben werden, wo das mobile Endgerät abgelegt werden kann, damit es immer griffbereit ist. Weist die Ausgabeeinrichtung beispielsweise einen Lautsprecher auf, können nicht nur visuelle oder physische Signale, sondern auch akustische Signale ausgegeben werden, die dem Benutzer einen ungefähren Ladezustand vermitteln können.

Die oben gestellte Aufgabe wird durch das erfindungsgemäße Verfahren zum Aufladen einer Energiespeichereinrichtung eines mobilen Endgeräts gelöst, gekennzeichnet durch die folgenden, durch eine Steuereinrichtung durchgeführten Schritte. Als Steuereinrichtung wird dabei ein Gerät oder eine Gerätekomponente zum Empfangen und Auswerten von Signalen, sowie zum Erzeugen von Steuersignalen verstanden. Die Steuereinrichtung kann beispielsweise als Steuergerät oder Steuerplatine ausgestaltet sein.

Es erfolgt zunächst, durch eine Ausführungsform der erfindungsgemäßen Aufladevorrichtung, ein Bereitstellen eines Ablageelements zum Ablegen des mobilen Endgeräts, wobei das Ablageelement durch eine Gesamtheit an Querschnittsoberflächen, die den Anteil der Ablagefläche bilden, gebildet wird. Durch die Steuereinrichtung erfolgt ein Feststellen einer aktuellen oder geeigneten Position/oder Lage des mobilen Endgeräts auf der Aufladevorrichtung. In Abhängigkeit von der festgestellten Position und/oder Lage erfolgt ein Feststellen desjenigen Stabelements oder derjenigen Stabelemente, die die das Ablageelement bilden.

Es folgt ein Erzeugen eines Aufladesignals, das ein Aktivieren des mindestens einen Energieabgabeelements durch die Energieabgabeeinrichtung beschreibt, und das Abgeben der Energie mittels des ermittelten Stabelements oder der ermittelten Stabelemente. Das erzeugte Aufladesignal wird an die Energieabgabeeinrichtung zum Abgeben der Energie an die Energiespeichereinrichtung des mobilen Endgeräts übertragen. Mit anderen Worten wird nur durch diejenigen Stabelemente Energie übertragen, die an der Energiespeichereinrichtung des mobilen Endgeräts anliegen oder anliegen werden.

Es ergeben sich die oben genannten Vorteile. Hierdurch ergibt sich auch eine hohe Energieersparnis.

Beispielsweise kann die Steuereinrichtung ein Feststellen einer Position und/oder Lage der Energiespeichereinrichtung in dem mobilen Endgerät durchführen, beispielsweise durch Abrufen einer diesbezüglichen Information aus einem Bordcomputer oder durch Abrufen eines Information-Datenblattes aus dem Internet. In Abhängigkeit von der festgestellten Position und/oder Lage der Energiespeichereinrichtung kann ein Feststellen desjenigen Stabelements oder derjenigen Stabelemente erfolgen, die an der Energiespeichereinrichtung angeordnet sind oder angeordnet sein werden. Das Aufladesignal kann dann die festgestellten Stabelemente oder das festgestellte mindestens eine Stabelement beschreiben. Hierdurch wird ein Aufladevorgang noch effizienter gestaltet und es wird noch mehr Energie gespart.

Es kann gemäß einer weiteren Ausführungsform des erfindungsgemäßen Verfahrens zunächst ein Feststellen einer Form des mobilen Endgeräts, das sich im einen Innenraum des Kraftfahrzeugs befinden kann, erfolgen. Beispielsweise kann eine Scanvorrichtung des Kraftfahrzeugs einen Benutzer des Kraftfahrzeugs beim Einsteigen in das Kraftfahrzeug scannen und dabei erfassen, welches mobile Endgerät er mit sich führt. Durch beispielsweise eine Bildverarbeitungssoftware kann mittels einer Mustererkennung festgestellt werden, um was für ein des mobiles Endgerät oder welche Form es sich handelt. Alternativ kann der Benutzer beispielsweise über ein Infotainmentsystem des Kraftfahrzeugs das Modell seines mobilen Endgeräts eingeben. Anhand einer entsprechenden Benutzereingabe kann dann die Form festgestellt werden.

Es erfolgt außerdem ein Ermitteln einer zum Lagern des mobilen Endgeräts geeigneten Position auf der Aufladevorrichtung.

In Abhängigkeit von der festgestellten Form des mobilen Endgeräts und der ermittelten Position erfolgt ein Erzeugen eines Ablageflächeformvorgabesignals, das ein Verstellen des mindestens einen Stabelementes der Ablagevorrichtung entlang seiner Haupterstreckungsachse beschreibt.

Das erzeugte Abgabeflächenformvorgabesignal wird an die Stelleinrichtung der Aufladevorrichtung zum Verstellen des mindestens einen Stabelements übertragen, und dadurch erfolgt das Bilden des Ablageelements, sodass der durch eine Gesamtheit an Querschnittsoberflächen gebildete Anteil der Ablagefläche ein zu der festgestellten Form zumindest teilweise passförmiges Ablageelement in der ermittelten Position bildet.

In einer Weiterbildung kann die Steuereinrichtung ein Feststellen eines Modells des mobilen Endgeräts durchführen, beispielsweise in Abhängigkeit von einem Sensorsignal eines Sensors des Kraftfahrzeugs, oder in Abhängigkeit von einer von dem mobilen Endgerät übertragenen Information an die Steuereinrichtung. Das Feststellen der Form des mobilen Endgeräts kann dann anhand des festgestellten Modells erfolgen. Hierdurch folgt der Aufladevorgang besonders individuell und dadurch besonders effizient.

Gemäß einer weiteren Weiterbildung des erfindungsgemäßen Verfahrens kann die Steuereinrichtung ein Feststellen einer Position- oder Lageänderung eines Körpers des Benutzers durchführen, beispielsweise mithilfe eines Sensors eines Kraftfahrzeugsitzes oder einer Kamera. Die Steuereinrichtung kann ebenfalls ein Feststellen einer aktuellen Position des Ablageelements durchführen. In Abhängigkeit von der festgestellten Position- oder Lageänderung kann ein Ermitteln einer alternativen Position des Ablageelements erfolgen, in der das in dem Ablageelement gelagerte mobile Endgerät für den Benutzer aus der geänderten Körperposition und/oder Körperlage besser erreichbar ist, und ein Erzeugen eines weiteren Ablageflächenformvorgabesignals, das ein Verstellen einer Mehrzahl an Stabelementen zum Überführen des Ablageelements aus der aktuellen Position in die ermittelte alternative Position beschreiben kann. Danach kann die Steuereinrichtung ein Übertragen des weiteren Ablageflächenformvorgabesignals an die Stelleinrichtung durchführen. Hierdurch kann das gelagerte mobile Endgerät bei einer Änderung der Körperposition des Benutzers zum Beispiel wieder näher an den Benutzer in geschoben werden, ohne dass der Benutzer selbst das mobile Endgerät nehmen und näher zu sich hinlegen muss. Da der Benutzer sich nicht um die Umpositionierung des mobile Endgeräts kümmern muss oder sich nicht das nächste Mal, wenn er das mobile Endgerät haben möchte, zum Beispiel weit nach vorne beugen muss, ergibt sich auch eine erhöhte Fahrsicherheit.

In Abhängigkeit von der ermittelten geeigneten Position auf der Aufladevorrichtung und/oder einer Position des Ablageelements kann ein Erzeugen eines Beleuchtungssignals erfolgen, das ein Beleuchten des Ablageelements beschreiben kann. Das erzeugte Beleuchtungssignals kann an die Ausgabeeinrichtung der Aufladevorrichtung übertragen werden, zum a) Steuern des Ausgabe- und/oder Leuchtelements des mindestens eines Stabelements, also beispielsweise zum Steuern eines Bildschirm des mindestens einen Stabelements; und/oder b) zum Steuern des Leuchtelements, das das mindestens eine Stabelement mit Licht beaufschlagen kann. Sowohl bei Dunkelheit, als auch bei Tageslicht kann der Benutzer somit sehr viel schneller erkennen, an welcher Stelle der Aufladevorrichtung das Ablageelement gebildet wurde oder gebildet wird, und der Benutzer muss beispielsweise bei schlechten Lichtverhältnissen oder bei großen Lichtkontrasten nicht lange diejenige Stelle suchen, an der er das mobile Endgerät ablegen kann. Hierdurch wird auch eine Fahrsicherheit erhöht, da der Benutzer der Suche des Ablageelements sehr wenig Aufmerksamkeit schenken muss.

Die oben gestellte Aufgabe wird, unter Erreichen der bereits genannten Vorteile, gelöst durch eine Ausführungsform einer erfindungsgemäßen Steuereinrichtung, die dazu eingerichtet ist, die eine Steuereinrichtung betreffenden Verfahrensschritte nach einer der oben beschriebenen Ausführungsformen des erfindungsgemäßen Verfahrens durchzuführen. Die Steuereinrichtung kann vorzugsweise eine Prozessoreinrichtung aufweisen, also eine Einrichtung zur elektronischen Datenverarbeitung, die vorzugsweise mindestens einen Mikrokontroller und/oder mindestens einen Mikroprozessor aufweisen kann. Die optionale Prozessoreinrichtung kann dazu eingerichtet sein, einen in einem Datenspeicher gespeicherten Programmcode auszuführen, wobei der Programmcode dazu eingerichtet ist, bei Ausführung durch die Prozessoreinrichtung die Steuereinrichtung dazu veranlassen, die eine Steuereinrichtung betreffenden Verfahrensschritte durchzuführen. Die erfindungsgemäße Steuereinrichtung kann beispielsweise als Steuerplatine der Aufladevorrichtung oder als Steuergerät des Kraftfahrzeugs ausgestellt sein.

Die oben gestellte Aufgabe wird gelöst durch eine erfindungsgemäße Aufladevorrichtung gemäß einer der oben beschriebenen Ausführungsformen, die eine Ausführungsform der erfindungsgemäßen Steuereinrichtung aufweist.

Die oben gestellte Aufgabe wird gelöst durch ein Kraftfahrzeug, das beispielsweise als Kraftwagen ausgestaltet sein kann, zum Beispiel als Personenkraftwagen. Das Kraftfahrzeug ist dadurch gekennzeichnet, dass es eine Ausführungsform der erfindungsgemäßen Steuereinrichtung und/oder eine Ausführungsform der erfindungsgemäßen Aufladevorrichtung aufweist.

Im Folgenden sind Ausführungsbeispiele der Erfindung beschrieben. Hierzu zeigt:
- Fig. 1: eine schematische Darstellung zu einer ersten Ausführungsform der erfindungsgemäßen Aufladevorrichtung und zu einer ersten Ausführungsform des erfindungsgemäßen Verfahrens;
- Fig. 2: eine schematische Darstellung zu einer weiteren Ausführungs-form der erfindungsgemäßen Aufladevorrichtung und zu einer weiteren Ausführungsform des erfindungsgemäßen Verfahrens;
- Fig. 3: eine schematische Darstellung zu einer weiteren Ausführungsform der erfindungsgemäßen Aufladevorrichtung und zu einer weiteren Ausführungsform des erfindungsgemäßen Verfahrens;
- Fig. 4: eine schematische Darstellung zu einer weiteren Ausführungsform der erfindungsgemäßen Aufladevorrichtung und zu einer weiteren Ausführungsform des erfindungsgemäßen Verfahrens;
- Fig. 5: eine schematische Darstellung zu einer Ausführungsform beispielhafter Stabelemente;
- Fig. 6: eine schematische Darstellung zu einer weiteren Ausführungsform der erfindungsgemäßen Aufladevorrichtung;
- Fig. 7: eine schematische Darstellung zu einer weiteren Ausführungsform der erfindungsgemäßen Aufladevorrichtung und zu einer weiteren Ausführungsform des erfindungsgemäßen Verfahrens;
- Fig. 8: eine schematische Darstellung zu einer weiteren Ausführungsform der erfindungsgemäßen Aufladevorrichtung und zu einer weiteren Ausführungsform des erfindungsgemäßen Verfahrens;
- Fig. 9: eine schematische Darstellung zu einer weiteren Ausführungsform der erfindungsgemäßen Aufladevorrichtung und zu einer weiteren Ausführungsform des erfindungsgemäßen Verfahrens;
- Fig. 10: eine schematische Darstellung zu einer weiteren Ausführungsform der erfindungsgemäßen Aufladevorrichtung und zu einer weiteren Ausführungsform des erfindungsgemäßen Verfahrens;
- Fig. 11: eine schematische Darstellung zu einer weiteren Ausführungsform der erfindungsgemäßen Aufladevorrichtung und zu einer weiteren Ausführungsform des erfindungsgemäßen Verfahrens;
- Fig. 12: eine schematische Darstellung zu einer weiteren Ausführungsform der erfindungsgemäßen Aufladevorrichtung und zu einer weiteren Ausführungsform des erfindungsgemäßen Verfahrens;
- Fig. 13: eine schematische Darstellung zu einer weiteren Ausführungsform der erfindungsgemäßen Aufladevorrichtung und zu einer weiteren Ausführungsform des erfindungsgemäßen Verfahrens; und
- Fig. 14: eine schematische Darstellung zu einer weiteren Ausführungsform der erfindungsgemäßen Aufladevorrichtung und zu einer weiteren Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

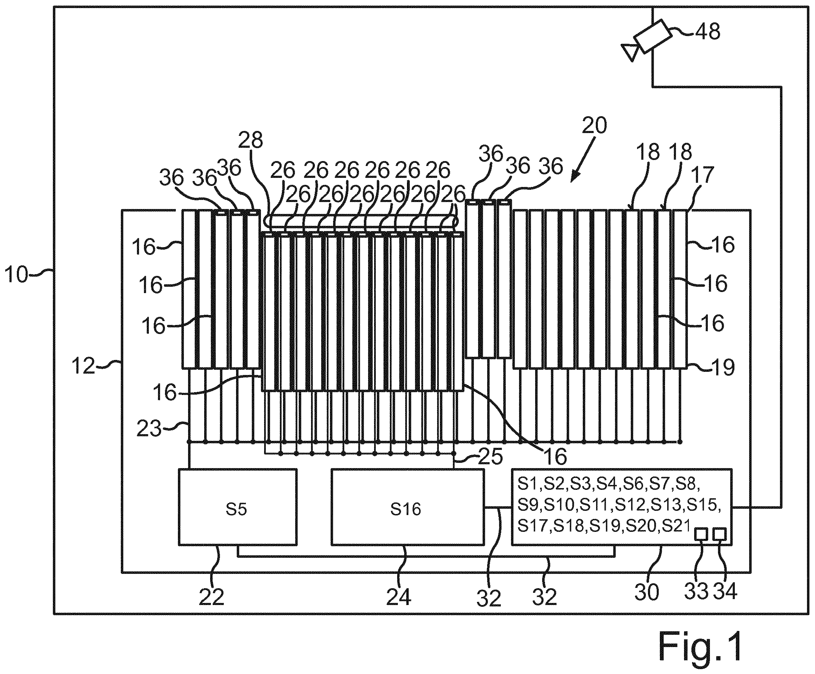

Die Fig. 1 veranschaulicht das Prinzip der erfindungsgemäßen Aufladevorrichtung 12 anhand eines ersten Ausführungsbeispiels. Hierzu zeigt die Fig. 1 ein Kraftfahrzeug 10, das beispielsweise als Personenkraftwagen ausgestaltet sein kann. Die Aufladevorrichtung 12 kann beispielsweise in einem Innenraumverkleidungselement, beispielsweise in der Mittelkonsole des Kraftfahrzeugs 10, integriert sein oder ein solches Innenraumverkleidungselement bilden.

Die Aufladevorrichtung 12 der Fig. 1 weist eine Mehrzahl von Stabelementen 16 auf, wobei in der Fig. 1 (sowie in den weiteren Figuren) aus Gründen der Übersichtlichkeit nicht jedes der Stabelemente 16 mit dem Bezugszeichen 16 gekennzeichnet ist. Ein jeweiliges Stabelement 16 kann im Beispiel der Fig. 1 beispielhaft als Pin ausgestaltet sein und weist jeweils ein erstes Ende 17 und ein gegenüberliegendes Ende 19 auf, wobei eine Querschnittsoberfläche 18 des ersten Endes 17 zu einer äußeren Umgebung der Aufladevorrichtung 12 gerichtet ist, sodass die Querschnittsoberflächen 18 eine Ablagefläche 20 bilden. Ein Stabelement 16 kann beispielsweise eine Länge von mehreren Zentimetern haben, beispielsweise eine Länge in einem Bereich von 0,5 Zentimeter bis 10 Zentimeter, vorzugsweise zwischen 0,5 Zentimeter und 5 Zentimeter. Eine Abmessung, beispielsweise ein Durchmesser, der Querschnittsoberfläche 18 kann beispielsweise 5 Millimeter betragen.

Die Aufladevorrichtung 12 weist eine Stelleinrichtung 22 auf, die auch als Verstelleinrichtung bezeichnet werden kann. Die Stelleinrichtung 22 kann beispielsweise als Bauteil mit einem Motor oder mit einer dem Fachmann aus dem Stand der Technik bekannten Technik zum Heben und Senken der Stabelemente 16 aufweisen, beispielsweise mittels einer Technologie, die aus Gebiet der "Dynamic Physical Rendering" (DPR), einem Teilforschungsgebiet der Nanotechnologie in Konvergenz mit Robotik, bekannt ist, und sich mit dem Vorgang der dynamischen Anordnung intelligenter Materialteilchen zu real existierenden Makrokörpern beliebiger, programmierbare Formen ("programmierbare Materie") beschäftigt. Die Aufladevorrichtung 12 kann dabei eine solche DPR-Technologie zum Steuern der Stabelemente 16 aufweisen, wie sie dem Fachmann beispielsweise von dem MIT Media Lab (Tangible Media Group) bekannt ist.

Die Fig. 1 zeigt dabei eine Kommunikationsverbindung 23, beispielsweise eine elektrische Verbindung von dem beispielhaften Motor zu dem jeweiligen Stabelemente 16. Im Beispiel der Fig. 1 können so die einzelnen Stabelement 16 unabhängig voneinander entlang ihrer Haupterstreckungsachse verstellt werden, also beispielsweise aus der Aufladevorrichtung herausgeschoben oder in die Aufladevorrichtung hineinversenkt. Die Stelleinrichtung 22 kann optional beispielsweise eine unter den Stabelementen 16 angeordnete Matrizen, die optional ein oder mehrere Magneten, vorzugsweise jeweils einen Magneten für jedes der Stabelemente 16, aufweisen kann.

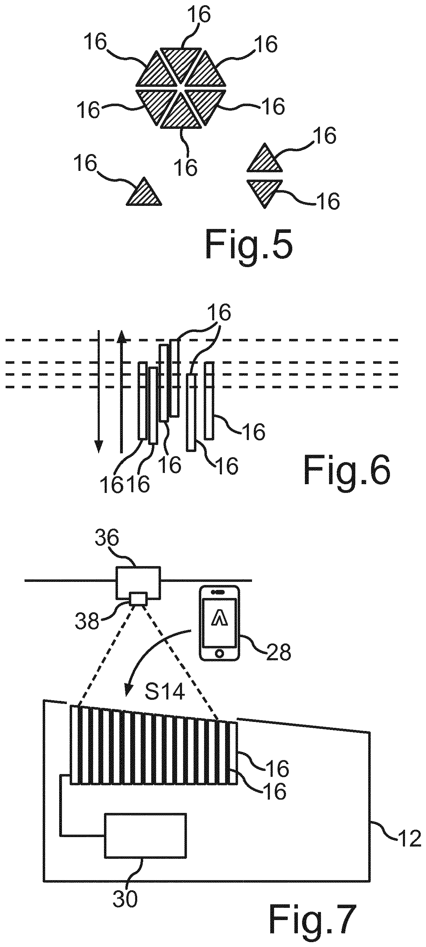

Alternativ oder zusätzlich können die jeweiligen Stabelemente 16 unter einer Vorspannung stehen, wobei bei einem Lösen der Vorspannung das entsprechende Stabelement 16 in eine der beiden Richtungen bewegt werden kann. Vorzugsweise kann dabei die Stelleinrichtung 22 dazu eingerichtet sein, eine stufenlose Bewegung der einzelnen Stabelemente 16 durchzuführen. Hierzu zeigt die Fig. 6 beispielhaft mehrere, nebeneinander angeordnete Stabelemente 16, wobei die einzelnen Stabelemente 16 unabhängig voneinander und stufenlos auf verschiedene Höhen gestellt werden können durch eine Bewegung in eine der durch die beiden Pfeile angezeigten Richtungen. Die gestrichelten Linien veranschaulichen dabei die unterschiedlichen Höhen der einzelnen Stabelemente 16. In der Fig. 6 sind dabei aus Gründen der Übersichtlichkeit die weiteren Komponenten der Aufladevorrichtung 12 nicht gezeigt.

Die Fig. 1 zeigt eine Energieabgabeeinrichtung 24, die zum Beispiel eine Stromquelle, mehrere Energieabgabeelemente 26 und eine entsprechende elektrische Verbindung 25 zu den einzelnen Energieabgabeelemente 26 aufweist. Im Beispiel der Fig. 1 kann dabei jedes der Stabelemente 16 jeweils ein Energieabgabeelement 26 aufweisen, das beispielsweise unterhalb oder auf der Querschnittsoberfläche 18 angeordnet sein kann. In der Fig. 1 sind dabei, der Übersichtlichkeit wegen, nur in denjenigen Stabelementen 16 die jeweiligen Energieabgabeelemente 26 gezeigt, die im Beispiel der Fig. 1 unter einem mobilen Endgerät 28 liegen. Die Energieabgabeeinrichtung 24 kann optional einen oder mehrere Kontaktsensoren aufweisen (in der Fig. 1 nicht gezeigt), der beispielsweise unter den Stabelementen 16 an den Stabelementen 16 angeordnet sein kann, so das mittels des beispielhaften Kontaktsensors bei einem Auflegen des mobilen Endgeräts 28 das Energieabgabeelement 26 aktiviert werden kann. Das Energieabgabeelement 26 kann beispielsweise als Induktionsspule ausgestaltet sein.

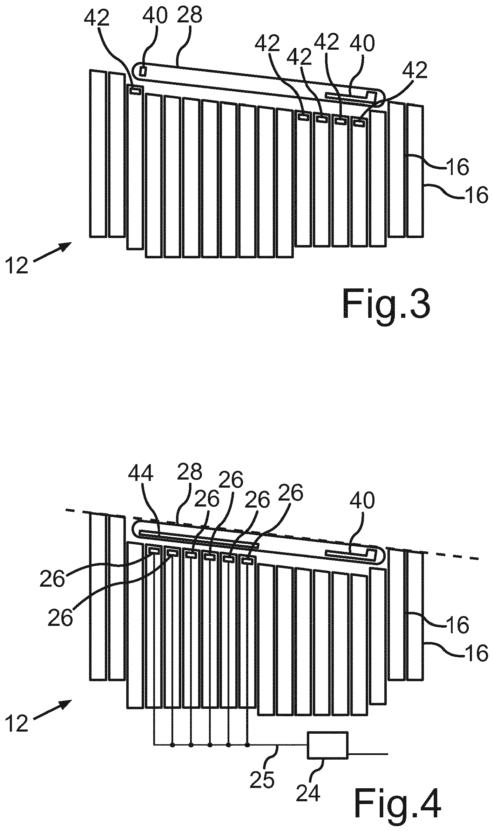

Die Fig. 4 zeigt in einem Ausschnitt der Fig. 1 das mobile Endgerät 28 mit der Energiespeichereinrichtung 44, die beispielsweise als Batterie oder Akku des mobilen Endgeräts 28 ausgestaltet sein kann. Die Fig. 4 zeigt ebenfalls die Stabelemente 16, in denen, aus Gründen der Übersichtlichkeit, nur einige Energieabgabeelemente 26 gezeigt sind. Die in der Fig. 4 gezeigten Pfeile veranschaulichen dabei die Richtung, in der die Energie, vorzugsweise Strom, geleitet werden kann. Der Übersichtlichkeit wegen sind in der Fig. 4 nicht alle Bestandteile der Aufladevorrichtung 12 gezeigt.

Die Aufladevorrichtung 12 der Fig. 1 weist ebenfalls eine optionale Steuereinrichtung 30 auf, die beispielsweise als Steuerplatine ausgestaltet sein kann, und optional eine Prozessoreinrichtung 33 und/oder einen Datenspeicher 34 aufweisen kann, wobei beispielhaft in dem Datenspeicher 34 ein Programmcode zum Durchführen des erfindungsgemäßen Verfahrens gespeichert sein kann. Die Prozessoreinrichtung kann dabei beispielsweise mehrere Mikroprozessoren und/oder Mikrokontroller aufweisen.

Die Steuereinrichtung 30 kann durch eine Datenkommunikationsverbindung 32 mit der Energieabgabeeinrichtung 24 und der Stelleinrichtung 22 verbunden sein. Eine solche Datenkommunikationverbindung kann beispielsweise eine drahtlose oder eine drahtgebundene Datenkommunikationsverbindung sein, beispielsweise eine WLAN- oder Bluetooth-Verbindung, oder ein Datenbus.

Die Fig. 1 zeigt ebenfalls einige Stabelemente 16 mit jeweils einer Ausgabeeinrichtung 36, die beispielsweise über eine Datenkommunikationsverbindung (aus Gründen der Übersichtlichkeit der Fig. 1 nicht gezeigt) mit der Steuereinrichtung 30 verbunden sein kann. Im Beispiel der Fig. 1 kann dabei beispielsweise jedes der Stabelemente 16 jeweils eine Ausgabeeinrichtung 36 und ein Energieabgabeelement 26 aufweisen.

Die Ausgabeeinrichtung 36 kann beispielsweise ein Leuchtelement aufweisen, beispielsweise eine LED oder eine OLED, und/oder einen Bildschirm, der beispielsweise mindestens eine LED oder OLED aufweisen oder als LCD-Bildschirm ausgestaltet sein kann. Die Ausgabeeinrichtung 36 kann beispielsweise an der Querschnittsoberfläche 18 angeordnet sein. Die einzelnen Ausgabeeinrichtungen 36, oder eine Gesamtheit oder ein Anteil der Ausgabeeinrichtungen 36, können beispielsweise einen Ladezustand der Energiespeichereinrichtung (in der Fig. 1 nicht gezeigt) des mobilen Endgeräts 28 anzeigen. Dieser kann beispielsweise durch die Energieabgabeeinrichtung 24 festgestellt werden. Eine entsprechende Information kann von der Steuereinrichtung 30 ausgewertet werden, und die Steuereinrichtung 30 kann beispielsweise ein Anzeigesignal erzeugen, das die Ausgabeeinrichtung 36 oder die Ausgabeeinrichtung 36 entsprechend steuern kann. Alternativ kann die Ausgabeeinrichtung 36 oder die Ausgabeeinrichtungen 36 beispielsweise eine verbleibende Ladedauer anzeigen.

Optional kann die Ausgabeeinrichtung 36 einen Lautsprecher aufweisen, der beispielsweise innerhalb eines der Stabelemente 16 angeordnet sein kann, oder beispielsweise in einer Verschalung der Aufladevorrichtung 12. Durch eine solche Ausgabeeinrichtung 36 kann beispielsweise ein akustisches Rückmeldesignal ausgegeben werden, falls das mobile Endgerät 28 aufgeladen ist.

Die einzelnen Ausgabeeinrichtungen 36 des Beispiels der Fig. 1 können beispielsweise ein Schwarzlicht ausgeben, wobei entsprechende Techniken aus dem Stand der Technik bekannt sind. Alternativ oder zusätzlich können die Ausgabeeinrichtung 36 oder die Ausgabeeinrichtungen 36 derart ausgestaltet sein, dass sie zum Beispiel an einer Seitenfläche des jeweiligen Stabelements 16 angeordnet sein können, so das beispielsweise das jeweilige Stabelement 16 aufleuchten kann. In einem weiteren Beispiel kann die Ausgabeeinrichtung 36 derart ausgestaltet sein, dass auf der entsprechenden Querschnittsoberfläche 18 ein Lichtkern oder Lichtpunkt ausgegeben werden kann. Hierzu kann innerhalb des jeweiligen Stabelements 16 ein punktueller oder eine punktuelle Auskoppelstelle aufweisender Lichtleiter angeordnet sein, und/oder die Querschnittsoberfläche 18 kann beispielsweise eine transzendente Folie aufweisen. Alternativ oder zusätzlich kann die Ausgabeeinrichtung 36 gemäß dem Fachmann aus dem Stand der Technik bekannter Technologien zum Umschalten des beispielhaften Bildschirms von einer opaken Erscheinung in eine transparente Erscheinung ausgestaltet sein.

Die Fig. 5 zeigt beispielhafte Ausführungen und Anordnungen von Stabelementen 16. Diese sind im Beispiel der Fig. 5 beispielhaft mit einem dreieckigen Querschnitt ausgestaltet, der alternativ zum Beispiel rund oder quadratisch oder anders mehreckig sein kann. Die Fig. 5 zeigt zum Beispiel eines einzelnen Stabelement 16 in einer Aufsicht, zwei Stabelemente 16, die aneinander anliegen können, und eine Gruppe von beispielsweise mehreren Stabelementen 16, die jeweils einen drei-eckigen Querschnitt haben und in der dargestellten Weise zueinander angeordnet sein können.

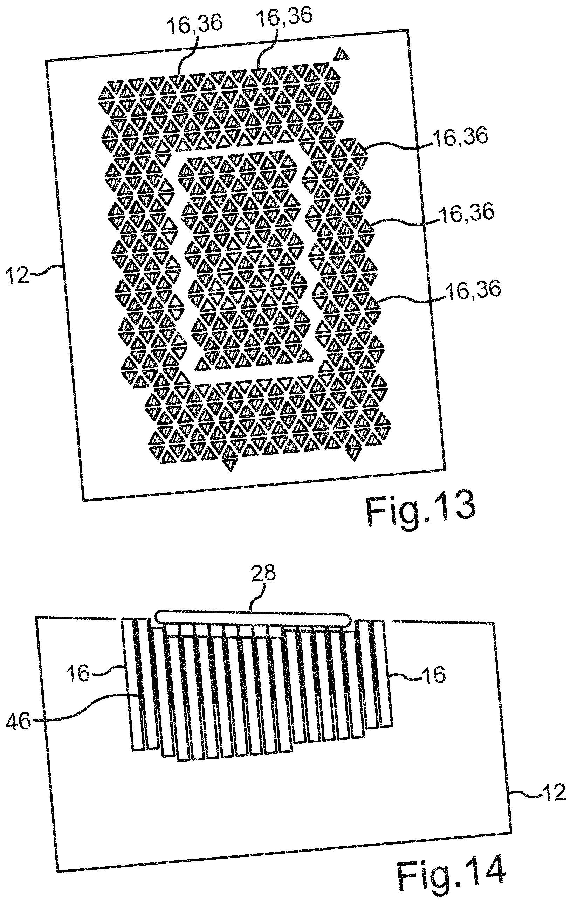

Die Fig. 13 zeigt eine beispielhafte Anordnung einer Mehrzahl von Stabelementen 16, die beispielhaft jeweils eine Ausgabeeinrichtung 36 mit einem Ausgabeelement, beispielsweise einem Bildschirm, aufweisen können. Die schraffierten dargestellten Stabelemente 16 können dabei beispielsweise ein Schwarzlicht ausgegeben oder an der Querschnittsoberfläche 18 eine schwarze Folie haben, während die nicht schraffierten Stabelemente 16 beispielsweise ein blaues Licht oder ein weißes Licht ausgeben können. Die Fig. 13 veranschaulicht das Zusammenspiel mehrerer Ausgabeeinrichtungen 36 der Mehrzahl an Stabelementen 16, die in ihrer Gesamtheit als einzelner Bildschirm zusammengeschaltet sein können. Der in der Mitte als durch einen weißen Rahmen zusammengefasste Block an Stabelementen 16 kann dabei Stabelemente 16 umfassen, die sich abgesenkt haben. Der in der Fig. 13 dargestellte weiße Rahmen soll dabei als perspektivische Maßnahme den Höhenunterschied zu den versenkten Stabelementen 16 veranschaulichen. Während in dem inneren, abgesenkten Block an Stabelementen 16 die darin dargestellten farblosen Stabelemente 16 beispielsweise ein Logo des mobilen Endgeräts 28 ausgeben können, können die durch die als Rahmen um den versenkten Block dargestellten farblosen Stabelemente 16 zum Beispiel in einer hellen Farbe leuchten, sodass das durch die versenken Stabelemente 16 geformte Ablageelement betont werden. Dadurch kann der Benutzer sofort erkennen, wo er das mobile Endgerät 28 hinlegen soll.

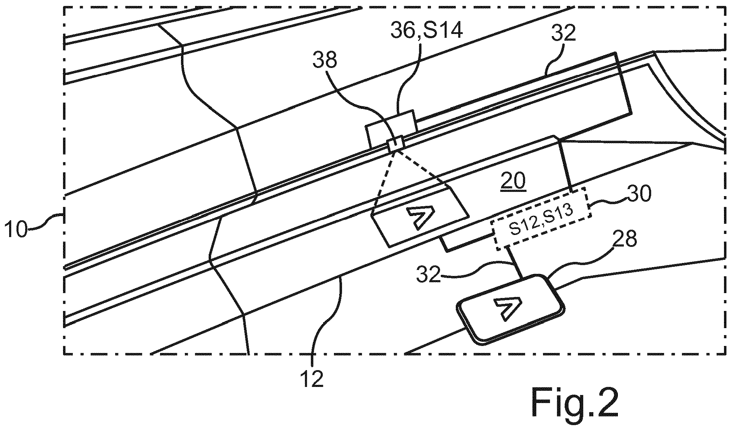

Die Fig. 2 zeigt zusätzlich zu den beispielhaften Bildschirmen der Querschnittsoberflächen 18 eine zusätzliche oder alternative Ausgabeeinrichtung 36, die beispielsweise oberhalb der Auflagefläche 20 angeordnet und beispielsweise in ein entsprechendes Innenraumverkleidungselement eingebaut sein kann. Die beispielhafte Ausgabeeinrichtung 36 weist beispielhaft mindestens ein Leuchtelement 38 auf, beispielsweise eine Leuchtdiode oder eine Glühbirne. Eine solche Ausgabeeinrichtung 36 kann beispielsweise das durch die Aufladevorrichtung 12 gebildete Ablageelement beleuchten.

Optional kann vorgesehen sein, dass beispielsweise über die Steuereinrichtung 30 ein Ausgabeinhalt, der von dem mobilen Endgerät 28 ausgegeben werden kann, auf die Ablagefläche 20 projiziert werden kann. In diesem Beispiel kann die Ausgabeeinrichtung 36 beispielsweise als Projektor ausgestaltet sein. Geeignete Technologien zum Spiegeln eines Bildschirminhalts eines mobilen Endgeräts 28, sogenannte "Mirror-Link"-Techniken, sind dem Fachmann aus dem Stand der Technik bekannt. Zwischen der Ausgabeeinrichtung 36 mit dem Leuchtelement 38 und der Steuereinrichtung 30, sowie zwischen der Steuereinrichtung 30 und mobilen Endgeräts 28 können entsprechende Datenkommunikationsverbindungen 32 bestehen, beispielsweise eine WLANoder Bluetooth Verbindung zwischen der Steuereinrichtung 30 und dem mobilen Endgerät 28, sowie beispielsweise eine drahtgebundenen Datenkommunikationsverbindung 32 zwischen der Steuereinrichtung 30 und der Ausgabeeinrichtung 36. Bei der Aufladevorrichtung 12 der Fig. 2 kann es sich dabei beispielsweise um eine in der Fig. 1 gezeigten Aufladevorrichtung 12 mit den entsprechenden hier beschriebenen Abwandlungen handeln.

Die Fig. 3 zeigt ein Ausführungsbeispiel der erfindungsgemäßen Aufladevorrichtung 12, beispielsweise die Aufladevorrichtung 12 aus dem Beispiel der Fig. 1, wobei im Folgenden nur auf die Unterschiede eingegangen wird. Das mobile Endgerät 28 der Fig. 3 zeigt eine Antenneneinrichtung 40 des mobilen Endgeräts 28, die beispielsweise als Antennensignalverstärker ausgestaltet sein kann. Einige oder mehrere oder alle der Stabelemente 16 können optional jeweils eine Antenneneinrichtung 42 aufweisen, die beispielsweise jeweils als Fraktalantenne oder GSM-Antenne ausgestaltet sein können. Die Fig. 3 zeigt dabei die Nähe der Antenneneinrichtungen 42 zu der entsprechenden Antenne 40 des mobilen Endgeräts 28. Eine solche Antenneneinrichtung 42 des mindestens einen Stabelements 16 ermöglicht eine Nutzung des Stabelements 16 - beziehungsweise des Kraftfahrzeugs 10 - als Antenne zum Verstärken und damit Stabilisieren des Antennensignals, und damit beispielsweise eine Verbindung zu einem Provider oder Satelliten verbessern.

Die Fig. 14 zeigt ein Beispiel einer Aufladevorrichtung 12, die beispielsweise wie die Aufladevorrichtung 12 der Fig. 1 ausgestaltet sein kann, wobei im Folgenden nur die zusätzlichen Merkmale oder Unterschiede beschrieben werden. Die Aufladevorrichtung 12 der Fig. 14 weist eine Kratzschutzeinrichtung 46 auf, die beispielsweise Gummipufferstege zwischen den einzelnen Stabelementen 16 umfassen kann. Alternativ kann die Kratzschutzeinrichtung 46 zum Beispiel jeweils eine Gummiröhre oder Gummihülse für jedes der Stabelemente 16 vorsehen. Die beispielhaften Gummipufferstege können das mobile Endgerät 28 vor beispielsweise einem Verrutschen oder Reiben auf den Stabelementen 16 schützen. Die Kratzschutzeinrichtung 46 kann dabei beispielsweise geringfügig über das Stabelement 16 ragen, und/oder sich bei einem Versenken des Stabelements 16 mitsenken. Ein beispielhafter Überstand solcher beispielhafter Gummipufferstege kann beispielsweise ein Zehntel einer Länge des entsprechenden Stabelements 16 betragen.

Die Fig. 1 zeigt weiterhin das Prinzip des erfindungsgemäßen Verfahrens anhand eines Ausführungsbeispiels. In einem optionalen Verfahrensschritt S1 kann die Steuereinrichtung 30 ein Modell des mobilen Endgeräts 28 feststellen. Hierzu kann beispielsweise über eine Datenkommunikationsverbindung (in der Fig. 1 nicht gezeigt) das mobile Endgerät 28 entsprechende Informationen an die Steuereinrichtung übertragen, oder die Steuereinrichtung 30 kann beispielsweise ein Sensorsignal aus einem Sensor 48, der beispielsweise als Kamera oder Scanner ausgestaltet sein kann, empfangen, wobei das Sensorsignal beispielsweise eine Kameraaufnahme beschreiben kann, auf der das mobile Endgerät 28 aufgenommen sein kann. Beispielsweise über eine Mobilfunk-Verbindung oder Internetverbindung kann die Steuereinrichtung optional ein durch den Sensor 48 gefilmtes Modell des mobilen Endgeräts 28 abfragen. Die beispielhafte Kameraaufnahme, die durch das Sensorsignal beschrieben sein kann, kann beispielsweise mithilfe einer Bildanalysesoftware ausgewertet werden, wobei beispielsweise zwischen einer Handtasche, einer Person und dem mobilen Endgerät 28 unterschieden werden kann.

Beispielsweise anhand des festgestellten Modells kann im Verfahrensschritt S2 ein Feststellen einer Form des mobilen Endgeräts 28 erfolgen. Im Verfahrensschritt S3 wird eine Position zum Lagern des mobilen Endgeräts 28 ermittelt, die beispielsweise davon abhängen kann, ob ein Benutzer des Kraftfahrzeugs sehr weit vorne sitzt oder sehr weit hinten, oder beispielsweise lange Arme hat. Mit anderen Worten kann ein Kriterium für die Position des Ablageelements sein, dass das mobile Endgerät 28 nach dem Ablegen (und beim Aufladen) gut erreichbar sein soll. Im Beispiel der Fig. 1 kann die ermittelte Position beispielsweise die in der Fig. 2 gezeigte Armablage sein.

Das von der Steuereinrichtung 30 im Verfahrensschritt S4 erzeugte Ablageflächenformvorgabesignal kann dann zum Beispiel die beispielhafte Armablage als bevorzugte Aufladevorrichtung 12, die Form des mobilen Endgeräts 28 und eine Position weiter vorne auf der Ablagefläche 20 beschreiben. Zum Bilden des Ablageelements (S5), das in der Fig. 1 durch die herabgesenkten Stabelemente 16 gebildet und als Ladeschale oder Lademulde ausgestaltet sein kann, erfolgt durch die Stelleinrichtung 22, die die in der Fig. 1 gezeigten herabgesenkten Stabelemente 16 beispielsweise um einen Zentimeter oder um zwei Zentimeter nach unten verschieben kann. Dieses Absenken kann durch das erzeugte Ablageflächenformvorgabesignals beschrieben werden, das beispielsweise anhand von Koordinaten der einzelnen, zu versenkenden Stabelemente 16 eine genaue Anweisung beschreiben kann, welche der Stabelemente 16 der Aufladevorrichtung 12 verstellt werden sollen. Zum Übertragen des Ablageflächenformvorgabesignals (S6) kann dieses über den beispielhaften Datenbus an die Stelleinrichtung 22 übermittelt werden.

Die Position des Ablageelements und damit die Ablageposition des mobilen Endgeräts 28 können beispielsweise nach dem Ablegen des mobilen Endgeräts 28 auf dem Ablageelement verschoben werden, bei dem beispielsweise an einer Seite des mobilen Endgeräts einige der Stabelemente 16 gehoben werden, während auf einer anderen Seite des mobilen Endgeräts 28 einige der Stabelemente 16 gesenkt werden. Die sich hebenden Stabelemente 16 üben eine Druckkraft auf das eine Ende des mobilen Endgeräts 28 aus, und die sich senkenden Stabelemente 16 an dem anderen Ende des mobilen Endgeräts 28 bilden keinen Widerstand mehr, sodass das mobile Endgerät 28 in Richtung der sich senkenden Stabelemente 16 rutscht und seine Position ändert.

Dies kann beispielsweise erfolgen, falls der Benutzer eine Körperhaltung oder Körperposition oder beispielsweise seinen Kraftfahrzeugsitz verschiebt. Das Feststellen der Position -oder Lageänderung (S7) kann beispielsweise mithilfe des Signals aus dem Sensor 48 erfolgen, wozu die Steuereinrichtung 30 beispielsweise eine Software zum Erkennen einer Körperhaltung aufweisen kann. Zum Verstellen der aktuellen Position des Ablageelements (S8) kann beispielsweise ausgelesen werden, welche der Stabelemente 16 gerade versenkt sind. Zum Ermitteln einer geeigneten, alternativen Position können beispielsweise Koordinaten der Ablagefläche 20 mit einem Koordinatensystem eines Innenraums des Kraftfahrzeugs 10 verglichen werden, wobei in dem Koordinatensystem beispielsweise auch die Koordinaten beschrieben sein können, an denen sich der Körper des Benutzers befindet. Zum Ermitteln der alternativen Position können die entsprechenden Koordinaten dann zum Beispiel miteinander verglichen werden.

Zum Positionieren des Ablageelements kann die Steuereinrichtung 30 dann ein weiteres Ablageflächenformvorgabesignals erzeugen (S10), das die neue Ablageposition beschreiben kann. Auch dieses weitere Ablageflächenformvorgabesignals kann an die Stelleinrichtung 22 übertragen werden (S11).

Zum Anzeigen des Ablageelements, also der beispielhaften Schale oder Lademulde, kann ein entsprechendes Beleuchtungssignal erzeugt werden (S12), das an die Ausgabeeinrichtung 36 übertragen werden kann (S13). Bereits oben wurde das beispielhafte Beleuchten des Ablageelements/oder der Ablagefläche 20 durch eine Leuchteinrichtung mit einem Leuchtelement 38 beschrieben (siehe Fig. 2, Verfahrensschritt S14), und das optionale anzeigen eines Anzeigeinhaltes (S15) durch eine oder mehrere Ausgabeeinrichtungen 36 (siehe Fig. 14).

Die Fig. 7 zeigt ein Ausführungsbeispiel der Aufladevorrichtung 12, wobei mittels einer beispielhaften Ausgabeeinrichtung 36 der Stabelemente 16 beispielsweise durch eine Licht-DPR-Interaktion beispielsweise ein Logo des mobilen Endgeräts 28 projiziert werden kann. Das Logo kann dabei beispielsweise mit einer Kontur erscheinen. Mit anderen Worten kann die Steuereinrichtung 30 das Verstellen der Stabelemente 16 und die Anzeige koppeln oder koordinieren.

Die oben beschriebenen Verfahrensschritte des Beispiels der Fig. 1 stellen optionale Verfahrensschritte dar. Das erfindungsgemäße Verfahren zum Aufladen der Energiespeichereinrichtung 44 umfasst zunächst den Vorgang des Bereitstellens des Ablageelements (S15), das durch Verstellen des mindestens einen Stabelements 16, vorzugsweise eine Auswahl mehrerer Stabelemente 16, erfolgen kann. Zum Aufladen der Energiespeichereinrichtung (S16) durch die Energieabgabeeinrichtung 24 kann die Steuereinrichtung 30 ein Aufladesignal erzeugen (S17), das beispielsweise ein Aktivieren derjenigen Energieabgabeelemente 26 beschreiben kann, die sich in einem angesteuerten Stabelemente 16 befinden. Das Aufladesignal wird dann über den beispielhaften Datenbus an die Energieabgabeeinrichtung 24 übertragen (S18).

Zum Feststellen der entsprechenden Stabelemente 16 (S22) kann beispielsweise die festgestellte Form des mobilen Endgeräts 28 herangezogen werden, und die bereits oben erwähnte Körperlage oder Körperposition. Nachdem Feststellen der aktuellen oder geeigneten Position (S19) können diejenigen Stabelemente 16 ermittelt werden, die das Ablageelement bilden (S20).

Beispielsweise können nur diejenigen Energieabgabeelemente 26 aktiviert werden, oder nur diejenigen Stabelemente 16 direkten Kontakt mit dem mobilen Endgerät 28 haben, die sich an einer Position der Energiespeichereinrichtung 44 befinden. Zum Feststellen der Position und/oder Lage der Energiespeichereinrichtung 44 (S21) kann beispielsweise eine entsprechende Information eines digitalen Datenblattes des Modells des mobilen Endgeräts 28 ausgelesen werden. Das Ansteuern der entsprechenden Stabelemente 16 und/oder Energieabgabeelemente 26 kann dann davon abhängen, welche Stabelemente 16 als an der Energiespeichereinrichtung 44 angeordnet festgestellt werden (S22).

Insgesamt zeigen die Beispiele, wie durch die Erfindung ein intelligentes und adaptives Laden von einem mobilen Endgerät 28 mittels mindestens einem Stabelement 16, beispielsweise mehreren Stabelementen 16, die zum Beispiel als "Pins" ausgestaltet sein können, ermöglicht wird.

Gemäß einem weiteren Ausführungsbeispiel können als intelligente und adaptive Pins ausgestaltete Stabelemente 16 dafür sorgen, dass der Benutzer des Kraftfahrzeugs 10 sein mobiles Endgerät 28 problemlos induktivladen kann und nur dort Energie übertragen wird, wo es gebraucht wird.

Gemäß einem weiteren Ausführungsbeispiel kann zum Beispiel ein moderner, zukünftiger Innenraum bereits bei Annäherung des Benutzers und/oder beim Betreten des Kraftfahrzeugs 10 erkennen, beispielsweise mittels einer Sensoreinrichtung mit einem Sensor 48, welche Art von mobilem Endgerät 28, also welches Modell des mobilen Endgeräts 28, der Benutzer bei sich trägt. Über beispielsweise eine große Datenbank können typspezifische Informationen in Echtzeit über dieses mobile Endgerät 28 abgerufen werden, zum Beispiel eine Größe, ein Aufbau, eine Information darüber, wo sich die Ladeeinheit, also die Energiespeichereinrichtung 44, befindet, beispielsweise ein Akku, oder eine Information zu einer Materialität. Diese Informationen gelangen dann beispielsweise in ein System des Kraftfahrzeugs oder des Kraftfahrzeugherstellers, und können zum Beispiel verarbeitet und blitzschnell an die Stabelemente 16 weitergeleitet werden.

Gemäß einem weiteren Ausführungsbeispiel können die beispielhaften "Smartpins", also die Stabelemente 16, als großflächiges System im Kraftfahrzeug 10 verbaut sein, mit dem Ziel, dass - egal wo man das mobile Endgerät 28 ablegt, das mobile Endgerät 28 erkannt, aufgenommen, fixiert und punktuell und effizient induktiv geladen wird.

Gemäß einem weiteren Ausführungsbeispiel kann beispielsweise eine Kopplung an eine Lichtprojektion und/oder die Stabelemente 16 fangen an zu leuchten, beispielsweise mittels der oben beschriebenen Ausgabeeinrichtungen 36. Die Kopplung kann genau definieren, wo das mobile Endgerät 28 am besten auf der großzügigen Fläche abgelegt werden soll (vergleiche auch Fig. 2, Fig. 3, Fig. 4, und Fig. 13.). Dann kann beispielsweise eine optimale Vertiefung entsprechend der Kontur des mobilen Endgeräts 28 erstellt werden (vergleiche Fig. 2).

Gemäß einem weiteren Ausführungsbeispiel können die Stabelemente 16 beispielsweise so konstruiert sein, dass sie sich heben und/oder senken können. Sie können zum Beispiel nur dort zum Einsatz kommen, wo sie benötigt werden. Liegt beispielsweise das mobile Endgerät 28 auf den Stabelementen 16, können beispielsweise nur diejenigen Stabelemente 16, zum Beispiel durch Anheben, eine induktive Ladeverbindung herstellen, die dazu benötigt werden. Die anderen Stabelemente 16 können brachliegen, d.h. können nicht verstellt werden. Wo sich welche Baugruppe befindet, kann beispielsweise anhand eines Datenblattes des mobilen Endgeräts 28 erkannt werden.

Bei einer Entnahme des mobilen Endgeräts 28 kann vorzugsweise vorgesehen sein, dass das mindestens eine Stabelement 16 das mobile Endgerät 28 nach oben drücken kann, um eine perfekte Entnahme zu ermöglichen.

Gemäß einem weiteren Ausführungsbeispiel können, damit das mobile Endgerät 28 beim Verlassen des Kraftfahrzeugs 10 nicht vergessen wird, die Stabelemente 16 beispielsweise mittels der Ausgabeeinrichtung 36 ein akustisches und/oder visuelles und/oder physisches und/oder haptisches Signal aussenden. Beispielsweise kann auf einem beispielhaften Bildschirm eine Nachricht erscheinen und/oder durch einen beispielhaften Lautsprecher kann zum Beispiel eine Stimme einer künstlichen Intelligenz die Worte "vergiss mich nicht" ausgeben.

Die Stabelemente 16 können vorzugsweise großflächigen Kraftfahrzeug 10 angelegt sein, daher können die Stabelemente 16 vorzugsweise auch als Extra Antenne zur Verbesserung des Signals genutzt werden. Ergibt sich eine Erhöhung der Reichweite und eine Stabilisierung des Netzes.

Durch die beispielhaften Bildschirme auf den Stabelementen 16 können alternativ oder zusätzlich Informationen und/oder Services aus dem mobilen Endgerät 28 ausgelagert werden, beispielsweise über eine dem Fachmann aus dem Stand der Technik bekannte Mirror-Link-Funktion. Diese Informationen oder Services können beispielsweise als Schnellzugriff erscheinen, zum Beispiel als Nachricht "Power-Auflagen möglich - ja oder nein - 99 Cent extra". Ein solcher Service kann beispielsweise in einem öffentlichen Verkehrsmittel, beispielsweise in einem Taxi, angeboten werden. Mithilfe der erfindungsgemäßen Aufladevorrichtung 12 kann optional in solchen Verkehrsmitteln zum Beispiel ein Service eines Schnell-Aufladevorganges von 15 Minuten angeboten werden. Diese Informationen können alternativ oder zusätzlich auf einem vorhandenen Bildschirm des mobilen Endgeräts 28 erscheinen, d.h. ausgegeben werden.

Gemäß einem weiteren Ausführungsbeispiel kann das mindestens eine Stabelement 16 zum Beispiel ein visuelles und/oder akustisches und/oder physisches Signal ausgeben, vorzugsweise wenn der Ladevorgang beginnt und/oder unterbrochen und/oder beendet ist. Die Stabelemente 16 können als Signalverstärker, Antenne und/oder Stabilisierung der Verbindung genutzt werden wie bereits oben beschrieben.

Gemäß einem weiteren Ausführungsbeispiel des erfindungsgemäßen Verfahrens kann beispielsweise jedes einzelne Stabelement 16 über die Möglichkeit verfügen, den Prozess des individuellen Ladens zu vollziehen. Jedes der Stabelemente 16 kann beispielsweise je nach Anwendung einzeln angesteuert werden und kann damit individuell auf verschiedene Situationen adaptiv reagieren, beispielsweise sich senken, heben, laden und/oder leuchten. Durch optionale, eingebaute Lichtleiter der optionalen Ausgabeeinrichtung 36 kann zum Beispiel jedes der Stabelemente 16 ein visuelles und/oder haptisches Signal absenden.

Beispielsweise können einzelne Stabelemente 16 mit kleinen Bildschirme einer Ausgabeeinrichtung 36 ausgestattet sein, die je nach Verwendung Informationen abspielen können, die relevant für den Benutzer sein können. Optional kann zum Beispiel die Oberfläche der Stabelemente 16 kratzfest und so ausgeprägt sein, dass sogenannte Gummipufferstege dafür sorgen, dass das mobile Endgerät 28 nicht verkratzt wird und einen verbesserten oder perfekten Halt hat (vergleiche Fig. 14).

Die Fig. 1 zeigt beispielhaft eine Aufladevorrichtung 12 mit Stabelementen 16, die sich allen Objekten anpassen und diese gut halten können. Mittels der Ausgabeeinrichtung 36 können ausgelagerte Zusatzinformationen, Serviceangebote und/oder Hinweise ausgegeben werden. Optional können die Stabelemente 16 jeweils als Taster ausgeprägt sein oder beispielsweise berührungssensitive Bildschirme aufweisen. Stabelemente 16 mit beispielsweise einer induktiven Ladevorrichtung können für ein drahtloses Aufladen sorgen.

Die Fig. 3 zeigt beispielhafte Stabelemente 16, die sich verbinden und das Kraftfahrzeug 10 als Antenne zum Verstärken eines Signals verbinden können, und eine stabile und sichere Verbindung zu beispielsweise einem Provider oder Satelliten generieren können.

Die Fig. 4 zeigt beispielhaft ein System, das durch beispielsweise ein abgerufenes Datenblatt des mobilen Endgeräts 28 weiß, wo sich welches Bauteil, also auch die Energiespeichereinrichtung 44, befinden kann. Die benötigten Stabelemente 16 zum induktiven Laden können sich anheben und sich verbinden. Hierdurch wird eine punktgenaue und effiziente Ladung ermöglicht. Die Fig. 6 zeigt eine mögliche stufenlose Bewegung der Stabelemente 16, beispielsweise Z-Richtung, so beispielsweise entlang einer Kraftfahrzeug-Hochachse.

Die Fig. 7 zeigt eine beispielhafte Licht-DPR-Interaktion, wobei ein Logo des mobilen Endgeräts 28, das beispielsweise als Telefon oder Tablet PC ausgestaltet sein kann, mit einer Kontur erscheinen kann.

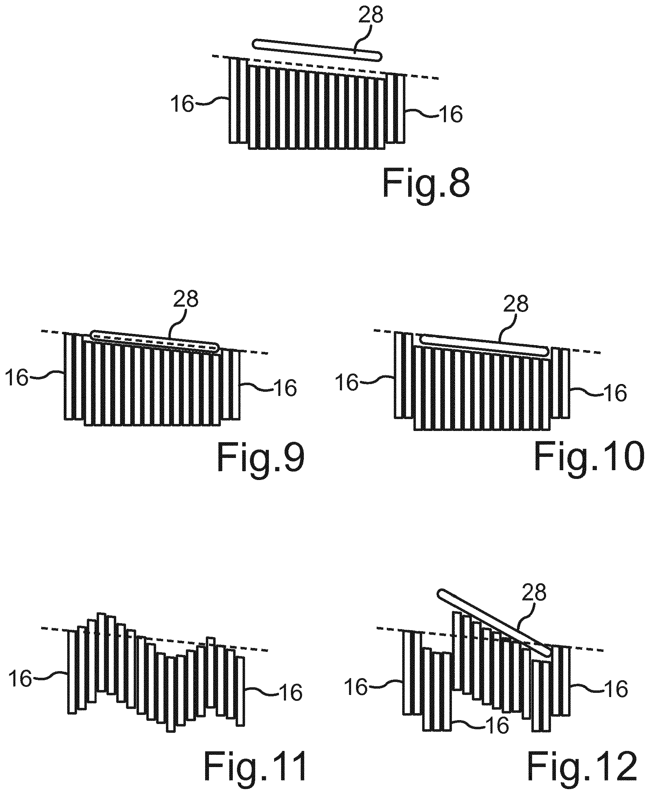

Die Fig. 8 zeigt ein Ausführungsbeispiel, wie sich das beispielhafte DPR-System zum Beispiel senken kann, und dadurch zum Beispiel eine Lademulde oder Konturmulde bilden kann. Die gestrichelte Linie zeigt dabei eine Ebene der nicht versenken Stabelemente 16. Gemäß dem Beispiel der Fig. 8 können die Querschnittsoberflächen 18 der einzelnen Stabelemente 16 beispielsweise schräg gefräst sein.

Die Fig. 9 zeigt das mobile Endgerät 28, das in der durch die Fig. 8 gezeigten Kontaktmulde, also in dem Ablageelement, abgelegt ist. Dabei kann ein Kontakt zwischen dem mobilen Endgerät 28 und den entsprechenden Stabelementen 16 und/oder den Energieabgabeelementen 26 hergestellt werden.

Die Fig. 10 zeigt beispielhaft bündig abgesenkte Stabelemente 16 zu der Ablagefläche 20.

Die Fig.11 zeigt beispielhaft eine durch die Stabelemente 16 gebildete Welle, wobei mit einer solchen "Welle" beispielsweise das mobile Endgerät 28 verschoben werden kann.

Die Fig. 12 zeigt eine beispielhafte Konstellation der Stabelemente 16 bei einer Entnahme des mobilen Endgeräts 28, wobei einige der Stabelemente 16 beispielsweise weiter aus der Aufladevorrichtung 12 gehoben oder gedrückt werden, um das mobile Endgerät 28 hervorzuheben, sodass ein Benutzer es gut greifen kann.

Die Fig. 13 zeigt beispielhafte Stabelemente 16, die sich absenken, wobei ein beispielhafter Gesamtbildschirm aus mehreren Einzelbildschirmen die Struktur aufnehmen kann.

Schließlich zeigt die Fig. 14 eine weiche Kontaktfläche zu den beispielhaften Pins, die beispielhaft durch Gummipufferstege der Kratzschutzeinrichtung 46, die das mobile Endgerät 28 vor den Stabelementen 16 schützen und ein Verrutschen innerhalb der Vertiefung mindern soll, abstützen.

## Patentansprüche

1. Aufladevorrichtung (12) für ein Kraftfahrzeug (10), umfassend
- eine Mehrzahl an Stabelementen (16), wobei jedes Stabelement (16), das ein erstes Ende mit einer Querschnittsoberfläche (18) aufweist, und wobei eine Haupterstreckungsachse jedes Stabelements (16) den Anteil einer Ablagefläche (20) schneidet, sodass ein zweites, dem ersten Ende gegenüberliegendes Ende des jeweiligen Stabelements (16) von dem Anteil der Ablagefläche (20) abgewandt ist und in die Aufladevorrichtung (12) hineinragt; und wobei jedes der Stabelemente (16) jeweils entlang seiner Haupterstreckungsachse verstellbar angeordnet ist, und wobei die jeweiligen Querschnittsoberflächen (18) jeweils einen Anteil der Ablagefläche (20) der Aufladevorrichtung (12) bilden,
- eine Stelleinrichtung (22) zum Verstellen des mindestens einen Stabelements (16) entlang der Haupterstreckungsrichtung, wobei die Stelleinrichtung (22) dazu ausgebildet ist, einen Anteil der Stabelemente (16) oder jedes der Stabelemente (16) zu verstellen; und
- eine Energieabgabeeinrichtung (24) mit mindestens einem Energieabgabeelement (26), wobei die Energieabgabeeinrichtung (24) zum Abgeben von Energie an eine Energiespeichereinrichtung (44) mittels dem mindestens einen Energieabgabeelement (26) ausgestaltet ist, und wobei die Energieabgabeeinrichtung (24) dazu ausgebildet ist, über einen Anteil der Stabelemente (16) oder jedes der Stabelemente (16) Energie abzugeben.

2. Aufladevorrichtung (12) nach Anspruch 1, wobei die Stelleinrichtung (22) dazu ausgebildet ist, jedes der Stabelemente (16) unabhängig von den anderen Stabelementen (16) zu verstellen.

3. Aufladevorrichtung (12) nach einem der vorhergehenden Ansprüche, **gekennzeichnet durch**:
- eine Antenneneinrichtung (42) zum Bereitstellen einer Datenkommunikationsverbindung.

4. Aufladevorrichtung (12) nach einem der vorhergehenden Ansprüche, **gekennzeichnet durch**:
- eine Kratzschutzeinrichtung (46), die einen Anteil einer Oberfläche des mindestens einen Stabelements (16) zumindest teilweise bedeckt.

5. Aufladevorrichtung (12) nach einem der vorhergehenden Ansprüche, **gekennzeichnet durch**
- eine Ausgabeeinrichtung, die mindestens ein Ausgabe- und/oder mindestens ein Leuchtelement (38) aufweist, wobei das mindestens eine Ausgabe- und/oder mindestens eine Leuchtelement (38) in und/oder an der Querschnittsoberfläche (18) des ersten Endes des mindestens einen Stabelements (16) angeordnet ist.

6. Verfahren zum Aufladen einer Energiespeichereinrichtung (44) eines mobilen Endgeräts (28), **gekennzeichnet durch** die folgenden, durch eine Steuereinrichtung (30) durchgeführten Schritte:
- durch eine Aufladevorrichtung (12) nach einem der Ansprüche 1 bis 5: Bereitstellen eines Ablageelements zum Ablegen eines mobilen Endgeräts (28, S15), wobei das Ablageelement durch eine Gesamtheit an Querschnittsoberflächen (18), die den Anteil der Ablagefläche (20) bilden, gebildet wird,
- Feststellen einer aktuellen oder geeigneten Position und/oder Lage des mobilen Endgeräts (28) auf der Aufladevorrichtung (12, S19),
- in Abhängigkeit von der festgestellten Position und/oder Lage: Ermitteln desjenigen Stabelements (16) oder derjenigen Stabelemente (16), die das Ablageelement bilden (S20), und
- Erzeugen eines Aufladesignals, das ein Aktivieren des mindestens einen Energieabgabeelements (26) beschreibt (S17), und das Abgeben der Energie mittels des festgestellten Stabelements (16) oder der festgestellten Stabelemente (16) beschreibt, und
- Übertragen des erzeugten Aufladesignals an die Energieabgabeeinrichtung (24) zum Abgeben der Energie an die Energiespeichereinrichtung (44) des mobilen Endgeräts (28, S18).

7. Verfahren nach Anspruch 6, **gekennzeichnet durch** die folgenden, durch die Steuereinrichtung (30) durchgeführten Schritte:
- Feststellen einer Position und/oder Lage der Energiespeichereinrichtung (44) in dem mobilen Endgerät (28, S21), und
- in Abhängigkeit von der festgestellten Position und/oder Lage der Energiespeichereinrichtung (44) Feststellen desjenigen Stabelements (16) oder derjenigen Stabelemente (16, S22), die an der Energiespeichereinrichtung (44) angeordnet sind oder angeordnet sein werden,
wobei das Aufladesignal das festgestellte Stabelement (16) oder die festgestellten Stabelemente (16) beschreibt.

8. Verfahren nach einem der Ansprüche 6 oder 7, **gekennzeichnet durch** die folgenden, durch die Steuereinrichtung (30) eines Innenraumverkleidungselements des Kraftfahrzeugs (10) durchgeführten Schritte:
- Feststellen einer Form eines mobilen Endgeräts (28), das sich in einem Innenraum des Kraftfahrzeugs (10) befindet (S2),
- Ermitteln einer zum Lagern des mobilen Endgeräts (28) geeigneten Position auf der Aufladevorrichtung (12, S3),
- in Abhängigkeit von der festgestellten Form des mobilen Endgeräts (28) und der ermittelten Position Erzeugen eines Ablageflächenformvorgabesignals (S4), das ein Verstellen mindestens eines Stabelementes (16) der Aufladevorrichtung (12) entlang seiner Haupterstreckungsrichtung beschreibt, sodass der durch eine Gesamtheit an Querschnittsoberflächen (18) gebildete Anteil der Ablagefläche (20) eine zu der festgestellten Form zumindest teilweise passförmiges Ablageelement in der ermittelten Position bildet (S5), und
- Übertragen des Ablageflächenformvorgabesignals an die Stelleinrichtung (22) der Aufladevorrichtung (12) zum Verstellen des mindestens einen Stabelements (16), und dadurch Bilden des Ablageelements (S6).

9. Verfahren nach Anspruch 8, **gekennzeichnet durch** den folgenden, durch die Steuereinrichtung (30) durchgeführten Schritt:
- Feststellen eines Modells des mobilen Endgeräts (28, S1),
wobei das Feststellen der Form des mobilen Endgeräts (28) anhand des festgestellten Modells erfolgt.

10. Verfahren nach einem der Ansprüche 8 oder 9, **gekennzeichnet durch** die folgenden, durch die Steuereinrichtung (30) durchgeführten Schritte:
- Feststellen einer Positions- oder Lageänderung eines Körpers des Benutzers (S7),
- Feststellen einer aktuellen Position des Ablageelements (S8),
- in Abhängigkeit von der festgestellten Positions- oder Lageänderung Ermitteln einer alternativen Position des Ablageelements (S9), in der das in dem Ablageelement gelagerte mobile Endgerät (28) für den Benutzer aus der geänderten Körperposition und/oder Körperlage besser erreichbar ist,
- Erzeugen eines weiteren Ablageflächenformvorgabesignals (S10), das ein Verstellen einer Mehrzahl an Stabelementen (16) zum Überführen des Ablageelements aus der aktuellen Position in die ermittelte alternative Position beschreibt, und
- Übertragen des weiteren Ablageflächenformvorgabesignals an die Stelleinrichtung (22, S11).

11. Verfahren nach einem der Ansprüche 8 bis 10 zum Betreiben einer Aufladevorrichtung (12) nach Anspruch 5, **gekennzeichnet durch** die folgenden, durch die Steuereinrichtung (30) durchgeführten Schritte:
- in Abhängigkeit von der ermittelten geeigneten Position auf der Aufladevorrichtung (12) und/oder einer Position des Ablageelements Erzeugen eines Beleuchtungssignals (S12), das ein Beleuchten des Ablageelements durch einen anzuzeigenden Anzeigeinhalt und/oder durch Licht beschreibt, und
- Übertragen des erzeugten Beleuchtungssignals an die Ausgabeeinrichtung der Aufladevorrichtung (12, S13) zum a) Steuern des Ausgabe-und/oder Leuchtelements (38) des mindestens einen Stabelements (16); und/oder b) zum Steuern des Leuchtelements (38), das das mindestens eine Stabelement (16) mit Licht beaufschlagt (S14).

12. Steuereinrichtung (30), vorzugsweise aufweisend eine Prozessoreinrichtung (33), **dadurch gekennzeichnet, dass**
die Steuereinrichtung (30) dazu eingerichtet ist, die eine Steuereinrichtung (30) betreffenden Verfahrensschritte nach einem der Ansprüche 6 bis 11 durchzuführen.

13. Aufladevorrichtung (12) nach einem der Ansprüche 1 bis 5, **dadurch gekennzeichnet, dass**
die Aufladevorrichtung (12) eine Steuereinrichtung (30) nach Anspruch 12 aufweist.

14. Kraftfahrzeug (10), **dadurch gekennzeichnet, dass**
das Kraftfahrzeug (10) eine Steuereinrichtung (30) nach Anspruch 12 und/oder eine Aufladevorrichtung (12) nach einem der Ansprüche 1 bis 5, oder 13 aufweist.

## Claims

1. Charging device (12) for a motor vehicle (10), comprising
- a plurality of bar elements (16), wherein each bar element (16) has a first end with a cross-sectional surface (18), and wherein a main extension axis of each bar element (16) intersects the portion of a storage surface (20) so that a second end of the respective bar element (16) opposite the first end faces away from the portion of the storage surface (20) and projects into the charging device (12), and wherein each of the bar elements (16) is respectively arranged to be adjustable along its main extension axis, and wherein the respective cross-sectional surfaces (18) each form a portion of the storage surface (20) of the charging device (12),
- an adjusting apparatus (22) for adjusting the at least one bar element (16) along the main extension direction, wherein the adjusting apparatus (22) is designed to adjust a portion of the bar elements (16) or each of the bar elements (16) and
- an energy output apparatus (24) with at least one energy output element (26), wherein the energy output apparatus (24) is configured to output energy to an energy storage apparatus (44) by means of the at least one energy output element (26), and wherein the energy output apparatus (24) is configured to output energy via a portion of the bar elements (16) or each of the bar elements (16).

2. Charging device (12) according to claim 1, wherein the adjusting apparatus (22) is configured to adjust each of the bar elements (16) independently of the other bar elements (16).

3. Charging device (12) according to any of the preceding claims, **characterised by**:
- an antenna apparatus (42) for providing a data communication connection.

4. Charging device (12) according to any of the preceding claims, **characterised by**:
- an anti-scratch apparatus (46) which at least partly covers a portion of a surface of the at least one bar element (16).

5. Charging device (12) according to any of the preceding claims, **characterised by**:
- an output apparatus, which has at least one output and/or at least one lighting element (38), wherein the at least one output and/or at least one lighting element (38) is arranged in and/or on the cross-sectional surface (18) of the first end of the at least one bar element (16).

6. Method for charging an energy storage device (44) of a mobile terminal (28), **characterised by** the following steps performed by a control apparatus (30):
- by a charging device (12) according to any of claims 1 to 5: providing a storage element for storing a mobile terminal (28, S15), wherein the storage element is formed by a whole set of cross-sectional surfaces (18) which form the portion of the storage surface (20),
- detecting a current or suitable position and/or location of the mobile terminal (28) on the charging device (12, S19),
- depending on the detected position and/or location: determining the bar element (16) or bar elements (16) which form the storage element (S20), and
- generating a charging signal which describes an activation of the at least one energy output element (26) (S17), and the output of energy by means of the detected rod element (16) or the detected bar elements (16) and
- transmitting the generated charging signal to the energy output apparatus (24) for outputting the energy to the energy storage apparatus (44) of the mobile terminal (28, S18).

7. Method according to claim 6, **characterised by** the following steps performed by the control apparatus (30):
- detecting a position and/or location of the energy storage apparatus (44) in the mobile terminal (28, S18), and
- depending on the detected position and/or location of the energy storage apparatus (44) detecting the bar element (16) or the bar elements (16, S22), which are or will be arranged on the energy storage apparatus (44),
wherein the charging signal describes the detected bar element (16) or the detected bar elements (16).

8. Method according to any of claims 6 or 7, **characterised by** the following steps performed by the control apparatus (30) of an interior trim element of the motor vehicle (10):
- detecting a form of a mobile terminal (28), which is located in an interior of the motor vehicle (10) (S2),
- determining a suitable position on the charging device (12, S3) for storing the mobile terminal (28),
- depending on the detected form of the mobile terminal (28) and the determined position, generating a storage surface form preset signal (S4), which describes an adjustment of at least one bar element (16) of the charging device (12) along its main extension direction, so that the portion of the storage surface (20) formed by a whole set of cross-sectional surfaces (18) forms a storage element which a least partially fits the detected shape in the determined position (S5), and
- transmitting the storage surface form preset signal to the adjusting apparatus (22) of the charging device (12) for adjusting the at least one bar element (16) and thereby forming the storage element (S6).

9. Method according to claim 8, **characterised by** the following step performed by the control apparatus (30):
- detecting a model of the mobile terminal (28, S1),
wherein the detection of the form of the mobile terminal (28) is performed based on the detected model.

10. Method according to any of claims 8 or 9, **characterised by** the following steps performed by the control apparatus (30):
- detecting a change in position or location of a user's body (S7),
- detecting a current position of the storage element (S8),
- as a function of the detected change in position or location, determining an alternative position of the storage element (S9), in which the mobile terminal (28) mounted in the storage element is more accessible for the user from the changed body position and/or body location,
- generating a further storage surface form preset signal (S10), which describes an adjustment of a plurality of bar elements (16) for transferring the storage element from the current position to the determined alternative position, and
- transmitting the further storage surface form preset signal to the adjusting apparatus (22, S11).

11. Method according to any of claims 8 to 10 for operating a charging device (12) according to claim 5, **characterised by** the following steps performed by the control apparatus (30):
- depending on the determined suitable position on the charging device (12) and/or a position of the storage element, generating a light signal (S12) which describes an illumination of the storage element by a display content to be displayed and/or by light, and
- transmitting the generated light signal to the output apparatus of the charging device (12, S13) for a) controlling the output and/or lighting element (38) of the at least one bar element (16); and/or b) for controlling the lighting element (38), which applies light to the at least one bar element (16) (S14).

12. Control apparatus (30), preferably having a processor apparatus (33), **characterised in that**
the control apparatus (30) is configured to perform the method steps relating to a control apparatus (30) according to any of claims 6 to 11.

13. Charging device (12) according to any of claims 1 to 5, **characterised in that**
the charging device (12) has a control apparatus (30) according to claim 12.

14. Motor vehicle (10), **characterised in that**
the motor vehicle (10) has a control apparatus (30) according to claim 12 and/or a charging device (12) according to any of claims 1 to 5, or 13.

## Revendications

1. Dispositif de charge (12) pour un véhicule à moteur (10), comprenant
- une pluralité d'éléments en forme de barre (16), dans lequel chaque élément en forme de barre (16) qui présente une première extrémité avec une surface de section transversale (18), et dans lequel un axe d'extension principal de chaque élément en forme de barre (16) coupe la partie d'une surface de dépôt (20) de sorte qu'une seconde extrémité, opposée à la première extrémité, de l'élément en forme de barre respectif (16) est détournée de la partie de la surface de dépôt (20) et fait saillie dans le dispositif de charge (12) ; et dans lequel chacun des éléments en forme de barre (16) est disposé de manière ajustable respectivement le long de son axe d'extension principal et dans lequel les surfaces de coupe transversale (18) respectives forment respectivement une partie de la surface de dépôt (20) du dispositif de charge (12),
- un appareil d'ajustement (22) pour l'ajustement de l'au moins un élément en forme de barre (16) le long de la direction d'extension principal, dans lequel l'appareil d'ajustement (22) est réalisé pour ajuster une partie des éléments en forme de barre (16) ou de chacun des éléments en forme de barre (16) ; et
- un appareil de distribution d'énergie (24) avec au moins un élément de distribution d'énergie (26), dans lequel l'appareil de distribution d'énergie (24) est conçu pour la distribution d'énergie à un appareil de stockage d'énergie (44) au moyen de l'au moins un élément de distribution d'énergie (26) et dans lequel l'appareil de distribution d'énergie (24) est réalisé pour distribuer de l'énergie par l'intermédiaire d'une partie des éléments en forme de barre (16) ou de chacun des éléments en forme de barre (16).

2. Dispositif de charge (12) selon la revendication 1, dans lequel l'appareil d'ajustement (22) est réalisé pour ajuster chacun des éléments en forme de barre (16) indépendamment des autres éléments en forme de barre (16).

3. Dispositif de charge (12) selon l'une quelconque des revendications précédentes, **caractérisé par** :
- un appareil d'antenne (42) pour la fourniture d'une liaison de communication de données.

4. Dispositif de charge (12) selon l'une quelconque des revendications précédentes, **caractérisé par** :
- un appareil de protection contre les éraflures (46) qui recouvre au moins en partie une partie d'une surface de l'au moins un élément en forme de barre (16).

5. Dispositif de charge (12) selon l'une quelconque des revendications précédentes, **caractérisé par**
- un appareil d'émission qui présente au moins un élément d'émission et/ou au moins un élément éclairant (38), dans lequel l'au moins un élément d'émission et/ou l'au moins un élément éclairant (38) sont disposés dans et/ou au niveau de la surface de section transversale (18) de la première extrémité de l'au moins un élément en forme de barre (16).

6. Procédé pour la charge d'un appareil de stockage d'énergie (44) d'un terminal mobile (28), **caractérisé par** les étapes suivantes réalisées par un appareil de commande (30) :
- par un dispositif de charge (12) selon l'une quelconque des revendications 1 à 5 : fourniture d'un élément de dépôt pour le dépôt d'un terminal mobile (28, S15), dans lequel l'élément de dépôt est formé par un ensemble de surfaces de section transversale (18) qui forment la partie de la surface de dépôt (20),
- détection d'une position et/ou d'une situation actuelle ou appropriée du terminal mobile (28) sur le dispositif de charge (12, S19),
- en fonction de la position et/ou de la situation détectée : détermination de l'élément en forme de barre (16) ou des éléments en forme de barre (16) qui forment l'élément de dépôt (S20), et
- génération d'un signal de charge qui décrit (S17) une activation de l'au moins un élément de distribution d'énergie (26) et la distribution de l'énergie au moyen de l'élément en forme de barre (16) détecté ou des éléments en forme de barre (16) détectés, et
- transmission du signal de charge généré à l'appareil de distribution d'énergie (24) pour la distribution de l'énergie à l'appareil de stockage d'énergie (44) du terminal mobile (28, S18).

7. Procédé selon la revendication 6, **caractérisé par** les étapes suivantes réalisées par l'appareil de commande (30) :
- détection d'une position et/ou d'une situation de l'appareil de stockage d'énergie (44) dans le terminal mobile (28, S21), et
- en fonction de la position et/ou de la situation détectée de l'appareil de stockage d'énergie (44), détection de l'élément en forme de barre (16) ou des éléments en forme de barre (16, S22) qui sont ou seront disposés au niveau de l'appareil de stockage d'énergie (44),
dans lequel le signal de charge décrit l'élément en forme de barre (16) détecté ou les éléments en forme de barre (16) détectés.

8. Procédé selon l'une quelconque des revendications 6 ou 7, **caractérisé par** les étapes suivantes réalisées par l'appareil de commande (30) d'un élément de recouvrement d'habitacle intérieur du véhicule à moteur (10) :
- détection d'une forme d'un terminal mobile (28) qui se trouve (S2) dans un habitacle intérieur du véhicule à moteur (10),
- détermination d'une position appropriée pour l'entreposage du terminal mobile (28) sur le dispositif de charge (12, S3),
- en fonction de la forme détectée du terminal mobile (28) et de la position détectée, génération d'un signal d'exigence de forme de surface de dépôt (S4) qui décrit un ajustement d'au moins un élément en forme de barre (16) du dispositif de charge (12) le long de sa direction d'extension principale, de sorte que la partie formée par un ensemble de surfaces de section transversale (18) de la surface de dépôt (20) forme (S5) un élément de dépôt ajustable au moins partiellement à la forme détectée dans la position déterminée, et
- transmission du signal d'exigence de forme de surface de dépôt à l'appareil d'ajustement (22) du dispositif de charge (12) pour l'ajustement de l'au moins un élément en forme de barre (16), et donc la formation de l'élément de dépôt (S6).

9. Procédé selon la revendication 8, **caractérisé par** l'étape suivante réalisée par l'appareil de commande (30) :
- détection d'un modèle du terminal mobile (28, S1),
dans lequel la détection de la forme du terminal mobile (28) a lieu à l'aide du modèle détecté.

10. Procédé selon l'une quelconque des revendications 8 ou 9, **caractérisé par** les étapes suivantes réalisées par l'appareil de commande (30) :
- détection d'une modification de position ou de situation d'un corps de l'utilisateur (S7),
- détection d'une position actuelle de l'élément de dépôt (S8),
- en fonction de la modification de position ou de situation détectée, détermination d'une position alternative de l'élément de dépôt (S9) dans laquelle le terminal mobile (28) stocké dans l'élément de dépôt peut être plus facilement accessible à l'utilisateur à partir d'une position de corps et/ou une situation de corps modifiée,
- génération d'un autre signal d'exigence de forme de surface de dépôt (S10) qui décrit un ajustement d'une pluralité d'éléments en forme de barre (16) pour faire passer l'élément de dépôt de la position actuelle à la position alternative déterminée, et
- transmission de l'autre signal d'exigence de forme de surface de dépôt à l'appareil d'ajustement (22, S11).

11. Procédé selon l'une quelconque des revendications 8 à 10 pour l'exploitation d'un dispositif de charge (12) selon la revendication 5, **caractérisé par** les étapes suivantes réalisées par l'appareil de commande (30) :
- en fonction de la position appropriée déterminée sur le dispositif de charge (12) et/ou d'une position de l'élément de dépôt, génération d'un signal d'éclairage (S12) qui décrit un éclairage de l'élément de dépôt par un contenu d'affichage à afficher et/ou par la lumière, et
- transmission du signal d'éclairage généré à l'appareil d'émission du dispositif de charge (12, S13) pour a) la commande de l'élément d'émission et/ou d'éclairage (38) de l'au moins un élément en forme de barre (16) ; et/ou b) pour la commande de l'élément d'éclairage (38) qui alimente (S14) en lumière l'au moins un élément en forme de barre (16).

12. Appareil de commande (30), présentant de préférence un appareil à processeur (33), **caractérisé en ce que**
l'appareil de commande (30) est conçu pour exécuter l'étape de procédé concernant un appareil de commande (30) selon l'une quelconque des revendications 6 à 11.

13. Dispositif de charge (12) selon l'une quelconque des revendications 1 à 5, **caractérisé en ce que**
le dispositif de charge (12) présente un appareil de commande (30) selon la revendication 12.

14. Véhicule à moteur (10), **caractérisé en ce que**
le véhicule à moteur (10) présente un appareil de commande (30) selon la revendication 12 et/ou un dispositif de charge (12) selon l'une quelconque des revendications 1 à 5 ou 13.
